# EUROPEAN PATENT APPLICATION

(11) **EP 2 730 987 A2**
(43) Date of publication of application: **14.05.2014**
(21) Application number: 13189833.0
(22) Date of filing: 23.10.2013
(51) Int. Cl.: G05B 19/418

(54) **Robot system for improving accuracy of a synchronizing control between a robot and a conveying device**

(30) Priority: 13.11.2012 JP 2012249594
(71) Applicant: Kabushiki Kaisha Yaskawa Denki, Kitakyushu-shi, Fukuoka 806-0004 (JP)
(72) Inventor: Majima, Reiko, Fukuoka, 806-0004 (JP); Inoue, Hikaru, Fukuoka, 806-0004 (JP)
(74) Representative: Viering, Jentschura & Partner Patent- und Rechtsanwälte

(57) **Abstract**

A robot system (1, 1a, 1b) is provided, which includes a conveying device (2, 20, 21, 22, 23, 30) for conveying a workpiece (W), a robot (3) for performing a predetermined task to the workpiece (W) being conveyed by the conveying device (2, 20, 21, 22, 23, 30), a drive source (4, 31, 40, 41, 42, 43) for driving the conveying device (2, 20, 21, 22, 23, 30); and a control device (5) for controlling operations of the robot (3) and the drive source (4, 31, 40, 41, 42, 43). The control device (5) includes a drive source instruction value calculation module (5a1) for calculating a drive source instruction value indicative of an instruction to operate the drive source (4, 31, 40, 41, 42, 43), and a robot instruction value calculation module (5a2) for calculating a robot instruction value indicative of an instruction to operate the robot (3) based on the drive source instruction value calculated by the drive source instruction value calculation module (5a1).

## Description

### Technical Field

The present invention relates to a robot system.

### Background of the Invention

Conventionally, a technique of installing a robot system, for example, in a production line of certain products, has been proposed to improve manufacturing efficiency of the products. JP11-090871A discloses one example of the robot system which includes a conveying device for conveying workpieces and a robot for performing a predetermined task to each workpiece.

In the robot system, the robot and a drive source for driving the conveying device are often configured so that respective operations are controlled independently and an operating or conveying speed of the conveying device is set constant.

In such a case, the robot system controls operations of the robot, for example, based on outputs from a position detector, such as an encoder, attached to the drive source of the conveying device, and, it specifically controls the operations of the robot so that the operations synchronize with operations of the conveying device to repeatedly perform the predetermined task.

However, when the robot system is configured as described above, for example, if the conveying device is set to operate at high speed or drive so that it repeats acceleration and deceleration, a track delay may be caused in the operations of the robot with respect to the conveying speed or the variation in speed of the conveying device and, thus, accuracy of the synchronizing control between the robot and the conveying device may be degraded.

### Summary of the Invention

The present invention is made in view of the above situation, and it provides a robot system which can improve accuracy of a synchronizing control between a robot and a conveying device.

According to one aspect of the invention, a robot system includes a conveying device, a robot, a drive source, and a control device. The conveying device conveys a workpiece. The robot performs a predetermined task to the workpiece being conveyed by the conveying device. The drive source drives the conveying device. The control device controls operations of the robot and the drive source. The control device includes a drive source instruction value calculation module and a robot instruction value calculation module. The drive source instruction value calculation module calculates a drive source instruction value indicative of an instruction to operate the drive source. The robot instruction value calculation module calculates a robot instruction value indicative of an instruction to operate the robot based on the drive source instruction value calculated by the drive source instruction value calculation module.

### Effect of the Invention

According to the aspect of the invention, the accuracy of the synchronizing control between the robot and the conveying device can be improved.

### Brief Description of the Drawings

The present disclosure is illustrated by way of example and not by way of limitation in the figures of the accompanying drawings, in which the like reference numerals indicate like elements and in which:

Fig. 1 is a schematic view showing an entire robot system according to a first embodiment of the present invention;

Fig. 2 is a block diagram showing a configuration of the robot system of Fig. 1;

Fig. 3 is a block diagram showing a configuration of a general robot system;

Fig. 4 is a flowchart showing a procedure of processing performed by an operation instructing module of Fig. 2;

Fig. 5 is a flowchart showing a procedure of processing performed by a correction value calculation module of Fig. 2;

Fig. 6 is a schematic view showing an entire robot system according to a second embodiment of the present invention; and

Fig. 7 is an entire schematic view showing a modification of the robot system of Fig. 6.

### Detailed Description

Hereinafter, embodiments of a robot system disclosed in the present application will be described in detail with reference to the accompanying drawings. Note that the present invention is not limited to the following embodiments.

### (FIRST EMBODIMENT)

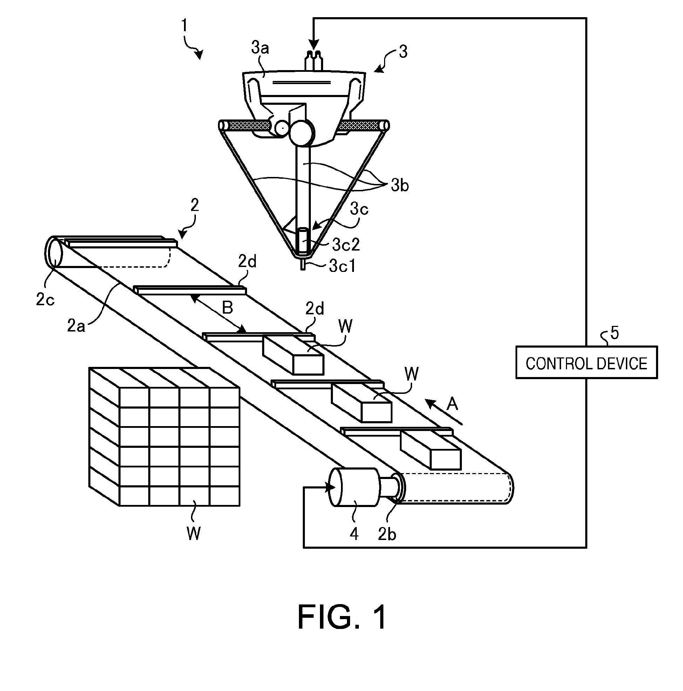

Fig. 1 is a schematic view showing an entire robot system 1 according to a first embodiment of the invention. As shown in Fig. 1, the robot system 1 includes a conveyor 2, a robot 3, a drive source 4, and a control device 5, and, for example, the robot system 1 is installed in a production line of workpieces in a production facility. Fig. 1 shows merely a schematic diagram and, thus, the system components such as the conveyor 2 and the robot 3 are not illustrated to scale. The same can be said for components in the second embodiment.

The conveyor 2 is a conveying device in this embodiment, which conveys workpieces W on a conveying belt 2a from upstream to downstream. Specifically, the conveyor 2 includes a drive pulley 2b and an idler pulley 2c which is located apart from the drive pulley 2b, and the belt 2a is wrapped around the drive pulley 2b and the idler pulley 2c.

The belt 2a is provided with a plurality of traverse rails 2d at every predetermined distance, and each workpiece W to be processed is suitably placed between adjacent traverse rails 2d. Note that the traverse rails 2d are provided on the belt 2a in this embodiment, but the traverse rails 2d may be replaced with lines which are drawn as a mark on the belt surface, or the belt 2a may be provided without any of the traverse rails 2d or the drawn lines.

An output shaft of the drive source 4 is connected with the drive pulley 2b. Therefore, when the drive source 4 rotates to drive, the drive pulley 2b is rotated and the belt 2a is driven accordingly to convey the workpieces W placed on the belt 2a in an arrow direction A.

Note that, although the conveyor 2 is herein shown as a belt conveyor, it may be any other conveying device such as a roller conveyor or a chain conveyor, which are driven by the drive source 4. Further, the shape of the workpiece W is not limited to the illustrated shape.

The robot 3 is a parallel link robot with a parallel link mechanism in this embodiment. Specifically, the robot 3 includes a housing 3a fixed at a suitable location in the production facility, a plurality of (for example, three) arm parts 3b connected in parallel with the housing 3a, and a movable part 3c supported at tip ends of the arm parts 3b.

Each arm part 3b is independently driven by respective motor units (not illustrated) accommodated in the housing 3a. The movable part 3c is provided with an end effector 3c1 and a motor unit 3c2.

The end effector 3c1 is a suction part for holding the workpiece W utilizing, for example, an suction force caused by a suction device such as a vacuum pump. The motor unit 3c2 is a drive part for rotating the end effector 3c1. By rotating the end effector 3c1, an orientation of the held workpiece W can be altered.

The robot 3 is connected with the control device 5, and it drives the motor units inside the housing 3a and/or the motor unit 3c2 of the movable part 3c according to instructions from the control device 5 as will be described later to perform a predetermined task to the workpiece W being conveyed by the conveyor 2. The term "predetermined task" herein means a task, for example, to suck and hold the workpiece W by the end effector 3c1 to move it to a predetermined location; however, it is not limited to this kind of operation.

Note that, although the end effector 3c1 of the robot 3 is described herein as being provided with the suction part, it may be any other end effectors, such as a hand part for gripping the workpiece W, which can perform the predetermined task to the workpiece W.

Further, although the robot 3 is illustrated as the parallel link robot in this embodiment, it may be any other robots, such as a serial link robot, a selective compliance assembly robot arm (SCARA), and a cartesian coordinate robot.

The drive source 4 includes an electric motor, such as a servomotor. The drive source 4 is connected with the control device 5, and drives the conveyor 2 according to an instruction from the control device 5 as will be described later. Note that the drive source 4 may be an engine (e.g., internal combustion engine) or a hydraulic motor, which is able to drive the conveyor 2.

The control device 5 controls operations of both the robot 3 and the drive source 4. That is, the control device 5 has the function to control the operation of the robot 3 and, in addition, a function to control operation of an external axis. Specifically, the external axis means an axis other than axes of the robot 3, and, in this embodiment, it is particularly an axis of the drive pulley 2b of the conveyor 2 driven by the drive source 4. Note that, although only one external axis is provided in this embodiment, two or more external axes may also be provided.

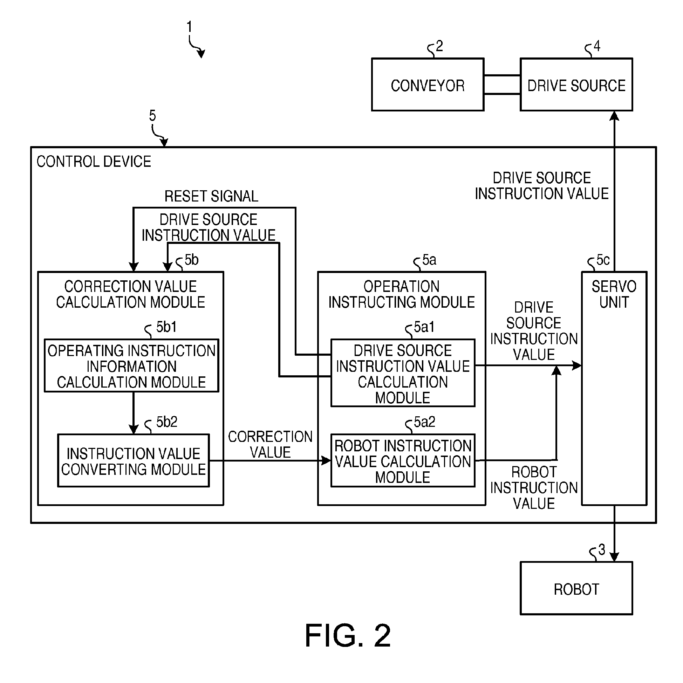

Fig. 2 is a block diagram showing a configuration of the robot system 1. Describing the control device 5 in detail with reference to Fig. 2, the control device 5 includes an operation instructing module 5a, a correction value calculation module 5b, and a servo unit 5c.

The operation instructing module 5a outputs instruction value(s) indicative of instruction(s) to operate the robot 3 and/or drive source 4. Specifically, the operation instructing module 5a includes a drive source instruction value calculation module 5a1 and a robot instruction value calculation module 5a2.

The drive source instruction value calculation module 5a1 calculates the drive source instruction value indicative of the operating instruction of the drive source 4 (i.e., a motor instruction value) so that the conveyor 2 performs a predetermined operation. The robot instruction value calculation module 5a2 calculates the robot instruction value indicative of the operating instruction of the robot 3 so that the robot 3 performs a predetermined operation, while synchronizing with the motion of the conveyor 2.

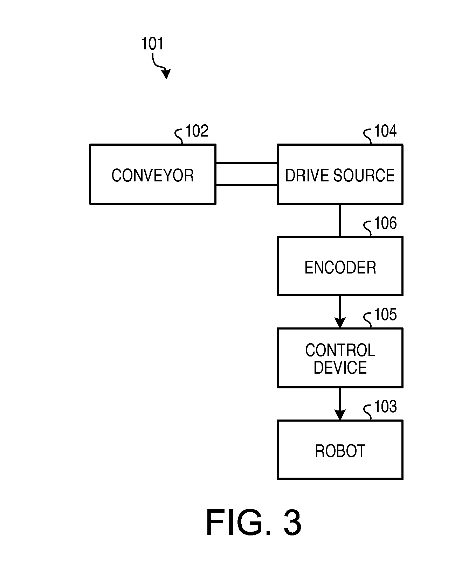

Here, with reference to Fig. 3, calculation of a robot instruction value in a general robot system 101 is described. As shown in Fig. 3, the general robot system 101 includes a conveyor 102, a robot 103, a drive source 104, an encoder 106, and a control device 105.

A control device (not illustrated), which is different from the control device 105, outputs a drive source instruction value to the drive source 104 to operate the drive source 104, and the drive source 104 then drives the conveyor 102. Thus, the encoder 106 attached to the drive source 104 outputs an encoder value indicative of a rotation amount or a rotation angle of the drive source 104 to the control device 105.

Based on the encoder value inputted from the encoder 106, the control device 105 calculates the robot instruction value so that the robot 103 synchronizes with the operation of the conveyor 102, and outputs the calculated robot instruction value to the robot 103 to operate the robot 103.

However, for example, when the conveyor 102 is set so that it is driven while repeating acceleration and deceleration, if it is configured such that the robot control is performed based on the encoder value indicative of the actual rotation of the drive source 104 as described above, the accuracy of the synchronizing control of the robot 103 and the conveyor 102 may be degraded.

That is, the control of the operation of the robot 103 cannot follow the speed variation of the conveyor 102, and, as a result, a track delay may be caused in the operation of the robot 103 and the accuracy of the synchronizing control between the robot 103 and the conveyor 102 may be degraded. Note that, for example, when the conveyor 102 is set so that it is driven comparatively at high speed, a similar situation may also be caused.

For this reason, in the robot system 1 according to the first embodiment of the present invention, the drive source instruction value is outputted from the control device 5 to the drive source 4 to operate the drive source 4, and the robot instruction value is calculated not based on the encoder value indicative of the actual rotation of the drive source 4 but based on the drive source instruction value outputted to the drive source 4. Therefore, even if the conveyor 2 varies in its conveying speed, the track delay will not be generated in the operation of the robot 3, and the accuracy of the synchronizing control between the robot 3 and the conveyor 2 can be improved.

Returning to Fig. 2, the control device 5 is described in detail. The drive source instruction value calculation module 5a1 calculates the drive source instruction value so that the conveyor 2 performs the predetermined operation (e.g., calculates the drive source instruction value so that the conveyor 2 repeats acceleration and deceleration), and outputs the calculated drive source instruction value to the servo unit 5c.

Specifically, the drive source instruction value calculation module 5a1 calculates the drive source instruction value, for example, so that the conveyor 2 is driven at intervals of one section (shown by "B" in Fig. 1) of the belt 2a divided by the traverse rails 2d. More specifically, the drive source instruction value is calculated so as to repeat an operation in which the belt 2a of the conveyor 2 advances only one section B and then stops, and, after a predetermined duration of time, the belt 2a again advances only one section B and then stops.

Thus, since, even if the drive source instruction value is calculated so that the conveyor 2 repeats acceleration and deceleration, the drive source instruction value calculation module 5a1 calculates the robot instruction value based on the drive source instruction value as will be described later, the robot 3 will not be delayed from the operation of the conveyor 2.

The servo unit 5c is controlled so that the robot instruction value and the drive source instruction value become a value according to control characteristics of the robot 3, more specifically, a value considering a control delay time and the like of the robot 3. Thus, when the synchronizing control between the robot 3 and the conveyor 2 is carried out as will be described later, the accuracy can be improved.

That is, as shown in Fig. 3, when the drive source 104 of the conveyor 102 is not controlled by the control device 105, the control device 105 will only able to obtain a feedback value from the encoder 106 of the drive source 104, and the robot 103 will perform the synchronizing control in a state where the control delay time of the robot 103 itself is added to the control delay time of the drive source 104. For this reason, there is a possibility that the track delay may be caused in the operation of the robot 103 and the synchronizing accuracy may be degraded.

Therefore, in this embodiment, the drive source instruction value calculation module 5a1 calculates the drive source instruction value not containing the control delay time as described above, and the robot instruction value calculation module 5a2 calculates the robot instruction value based on the drive source instruction value calculated by the drive source instruction value calculation module 5a1. Further, by the servo unit 5c controlling the drive source 4 taking the control delay time of the robot 3 into consideration, the accuracy of the synchronizing control between the robot 3 and the conveyor 2 can be further improved.

The drive source instruction value calculation module 5a1 further outputs a reset signal to the correction value calculation module 5b at a predetermined timing. The term "reset signal" is a signal for resetting operating instruction information of the drive source 4 described later.

Specifically, if the calculated drive source instruction value becomes a predetermined value, for example, if the drive source instruction value becomes a value indicating a time point at which the belt 2a of the conveyor 2 stops after advancing only one section B, the drive source instruction value calculation module 5a1 then outputs the reset signal. Note that, although the timings at which the activity of the conveyor 2 and the output of the reset signal are described using the particular example as described above, they may be suitably changed according to specifications or the like of the robot system 1.

The drive source instruction value calculated by the drive source instruction value calculation module 5a1 as described above is inputted into the servo unit 5c, and the servo unit 5c controls current supplied to the drive source 4 according to the drive source instruction value to drive the drive source 4. The conveyor 2 then performs the predetermined operation by the drive of the drive source 4.

The drive source instruction value is also inputted into the correction value calculation module 5b, and the correction value calculation module 5b calculates the correction value of the conveyor 2 based on the drive source instruction value calculated by the drive source instruction value calculation module 5a1.

Although described later in detail, the correction value of the conveyor 2 is a value calculated from the drive source instruction value, and, specifically, it means a displacement of the conveyor 2 according to the rotation of the drive source 4 when the drive source instruction value is inputted into the drive source 4 and the drive source 4 rotates.

Note that the correction value of the conveyor 2 is not limited to the displacement of the conveyor 2 described above, and it may be any other values indicative of the operating state of the conveyor 2 which can be obtained from the drive source instruction value, such as a time duration in which the conveyor 2 is driven, and a rotation amount or the number of rotations of the drive pulley 2b.

The correction value calculation module 5b includes an operating instruction information calculation module 5b1 and an instruction value converting module 5b2. Note that the drive source instruction value outputted to the correction value calculation module 5b from the drive source instruction value calculation module 5a1 is inputted into the operating instruction information calculation module 5b1.

The operating instruction information calculation module 5b1 calculates the operating information of the drive source 4 based on the drive source instruction value calculated by the drive source instruction value calculation module 5a1. Since the drive source instruction value is an instruction pulse, the operating instruction information calculation module 5b1 specifically counts the number of pulses, starting from the input timing of the reset signal to calculate an integrated value (hereinafter, referred to as "the pulse value"), and uses the calculated pulse value as the operating information of the drive source 4.

The operating instruction information and the operating information of the drive source 4 which are calculated by the operating instruction information calculation module 5b1 are calculated not based on the feedback value from the encoder provided to the drive source, but based on the drive source instruction value. Therefore, the operating instruction information and the operating information will not be influenced by the control delay time of the drive source 4. Note that the operating instruction information of the drive source 4 calculated by the operating instruction information calculation module 5b1 means the pulse value of the drive source 4 specifically obtained from the drive source instruction value.

Note that, although the pulse value is used as the operating information of the drive source 4, it may be, without limitation, a value calculated based on the drive source instruction value, which is, for example, a value indicative of the rotation amount or the number of rotations, a rotation distance, or a time duration of rotation of the drive source 4.

Moreover, when the reset signal is inputted from the drive source instruction value calculation module 5a1, the operating instruction information calculation module 5b1 resets the operating information of the drive source 4 calculated by then, specifically, resets the pulse value to zero.

As described above, the operating instruction information calculation module 5b1 resets the operating information of the drive source 4 when the reset signal is inputted at the predetermined timing. Thus, comparing with a configuration in which, for example, a switch for outputting a reset signal each time a workpiece passes therethrough is attached to a conveyor and an operating instruction information of the drive source is reset when the reset signal is outputted from the switch, the system of this embodiment can improve the accuracy of the synchronizing control between the robot 3 and the conveyor 2 as follows, for example.

(1) Specifically, when it is configured so that the operating instruction information of the drive source is reset when the reset signal is received from the switch, since an actual encoder value of the drive source is reset at the timing of passing through a reset position, a control delay time is caused. Therefore, the robot cannot follow the conveyor by the amount of the delay time, and this causes degradation in the accuracy of the synchronizing control.

Therefore, in this embodiment, without using the switch, the operating instruction information of the drive source 4 is reset at the output timing of the reset signal from the drive source instruction value calculation module 5a1. Thus, regardless of the existence of the delay of the workpiece W, the resetting is possible at the same timing, i.e., at the timing where the belt 2a of the conveyor 2 advances only one section B and then stops. Accordingly, if the operation of the robot 3 is controlled from the reset state each time as a starting point, the robot 3 can be synchronized with the conveyor 2 with sufficient accuracy.

(2) Moreover, in the device like the conveyor, since the drive source continuously operates only in one direction, there may be produced an inconvenience in which the drive source instruction value outputted from the drive source instruction value calculation module 5a1 excessively increases with time.

Therefore, in this embodiment, the control in which the drive source instruction value is reset at the predetermined timing (e.g., each time the drive source rotates by the length of the conveyor) is applied to make the continuous drive of the conveyor 2 in one direction possible (i.e., the endless drive).

The operating instruction information calculation module 5b1 outputs the calculated operating instruction information of the drive source 4 to the instruction value converting module 5b2. The instruction value converting module 5b2 converts the operating instruction information of the drive source 4 calculated by the operating instruction information calculation module 5b1 into the correction value of the conveyor 2, and it then outputs the converted correction value of the conveyor 2 to the robot instruction value calculation module 5a2.

As described above, since the control device 5 is provided with the correction value calculation module 5b for calculating the correction value of the conveyor 2, it is possible to calculate the correction value which is synchronized with the instruction value for the drive source 4 of the conveyor 2.

The robot instruction value calculation module 5a2 calculates the robot instruction value based on the drive source instruction value calculated by the drive source instruction value calculation module 5a1, specifically, based on the correction value of the conveyor 2 calculated from the drive source instruction value by the correction value calculation module 5b so that it interpolates the operation of the robot 3 while the robot 3 synchronizes with the operation of the conveyor 2.

The robot instruction value calculation module 5a2 outputs the calculated robot instruction value to the servo unit 5c. The servo unit 5c controls current supplied to the motor unit of the robot 3 based on the robot instruction value calculated by the robot instruction value calculation module 5a2 to operate the robot 3. Thus, the robot 3 can perform the predetermined operation, while synchronizing with the conveyor 2.

Note that, although the operation of the robot 3 applied with the synchronizing control by the control device 5 described above is motion(s) of the arm part 3b and/or the movable part 3c of the robot 3, it is not limited to them. For example, the operation may be such that the robot 3 is configured to be connected with a traveling shaft on which the robot 3 is movable in the longitudinal direction of the conveyor 2, and the robot 3 travels to follow the conveyor 2 via the traveling shaft along the longitudinal direction of the conveyor 2.

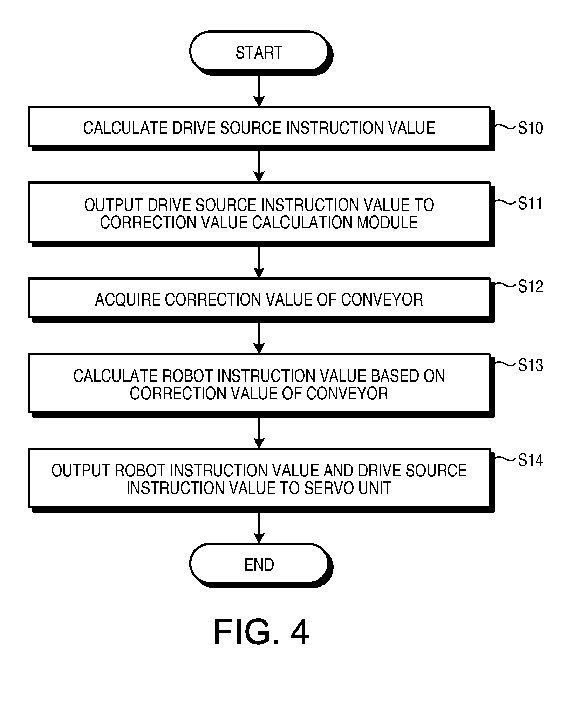

Fig. 4 is a flowchart showing a procedure of processing performed by the operation instructing module 5a described above. As shown in Fig. 4, the drive source instruction value calculation module 5a1 of the operation instructing module 5a calculates the drive source instruction value so that the conveyor 2 performs the predetermined operation (Step S10). Subsequently, the drive source instruction value calculation module 5a1 outputs the calculated drive source instruction value to the correction value calculation module 5b (Step S11).

The robot instruction value calculation module 5a2 of the operation instructing module 5a acquires the correction value of the conveyor 2 outputted from the correction value calculation module 5b as described above (Step S12). Based on the correction value of the conveyor 2, the robot instruction value calculation module 5a2 of the operation instructing module 5a calculates the robot instruction value so that the robot 3 synchronizes with the conveyor 2 (Step S13).

Then, the robot instruction value calculation module 5a2 outputs the calculated robot instruction value to the servo unit 5c, while the drive source instruction value calculation module 5a1 outputs the drive source instruction value to the servo unit 5c (Step S14). Note that, although not shown in Fig. 4, the drive source instruction value calculation module 5a1 outputs the reset signal to the correction value calculation module 5b at the predetermined timing, as described above.

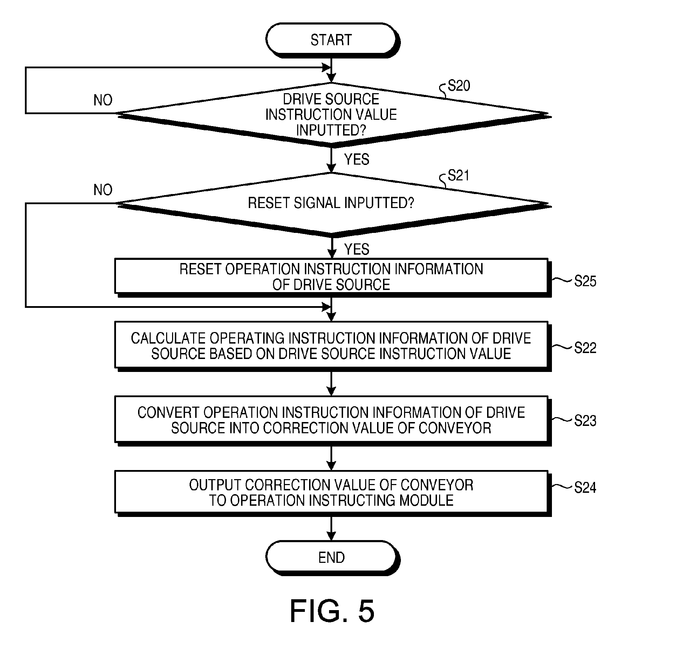

Fig. 5 is a flowchart showing a procedure of processing performed by the correction value calculation module 5b. As shown in Fig. 5, the operating instruction information calculation module 5b1 of the correction value calculation module 5b first determines whether the drive source instruction value is inputted from the drive source instruction value calculation module 5a1 of the operation instructing module 5a (Step S20). If the drive source instruction value is not inputted (Step S20, No), the processing of Step S20 is repeated.

On the other hand, if the drive source instruction value is inputted (Step S20, Yes), the operating instruction information calculation module 5b1 determines whether the reset signal is inputted from the drive source instruction value calculation module 5a1 (Step S21). If the reset signal is not inputted (Step S21, No), the operating instruction information calculation module 5b1 calculates the operating instruction information of the drive source 4 based on the drive source instruction value (Step S22).

The instruction value converting module 5b2 of the instruction value calculation module 5b converts the operating instruction information of the drive source 4 into the correction value of the conveyor 2 (Step S23), and then outputs the correction value of the conveyor 2 to the robot instruction value calculation module 5a2 of the operation instructing module 5a (Step S24). Then, in the robot instruction value calculation module 5a2, the robot instruction value is calculated based on the correction value of the conveyor 2, as described above.

On the other hand, if the reset signal is inputted from the drive source instruction value calculation module 5a1 (Step S21, Yes), the operating instruction information calculation module 5b1 proceeds to Step S25 to reset the operating instruction information of the drive source 4 calculated by then, specifically, reset the pulse value to zero.

As described above, in the first embodiment, since the control device 5 of the robot system 1 includes the drive source instruction value calculation module 5a1 for calculating the drive source instruction value, and the robot instruction value calculation module 5a2 for calculating the robot instruction value indicative of the operating instruction of the robot 3 based on the calculated drive source instruction value, the accuracy of the synchronizing control between the robot 3 and the conveyor 2 can be improved.

### (Second Embodiment)

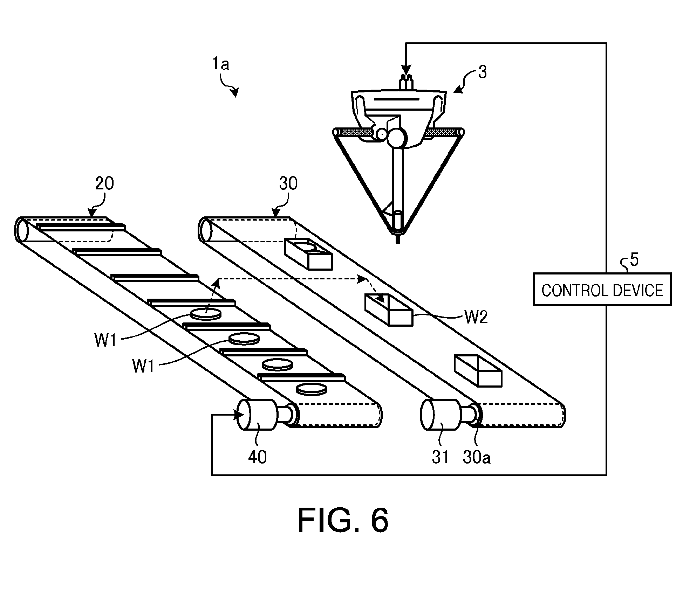

Fig. 6 is a schematic view showing a robot system according to a second embodiment of the invention, similar to the schematic view of Fig. 1. Note that, below, common configurations to the first embodiment are given with the same reference numerals, and explanations thereof are omitted.

As shown in Fig. 6, a robot system 1a according to the second embodiment includes a plurality of conveyors, specifically includes two conveyors (a first conveyor 20 and a second conveyor 30). The first conveyor 20 is driven by the drive source 40 and the operation of the drive source 40 is controlled by the control device 5, like the conveyor 2 of the first embodiment. Specifically, the drive source 40 is controlled so that, for example, it drives the first conveyor 20 at comparatively high speed and repeats acceleration and deceleration.

On the other hand, as for the second conveyor 30, a drive source 31 such as an electric motor, is connected with a drive pulley 30a, but the drive source 31 is not connected with the control device 5. That is, the second conveyor 30 is configured to be driven independently. Further, the drive source 31 is set so that the second conveyor 30 is driven, for example, at a comparatively low and constant speed.

The control device 5 controls the operation of the two conveyors 20 and 30 configured as above so that they perform predetermined tasks, while synchronizing with the robot 3. Specifically, the control device 5 causes the robot 3 to repeat a task in which, for example, the robot 3 sucks and holds a workpiece W1 being conveyed on the first conveyor 20 and accommodate the workpiece W1 into a box-shaped workpiece W2 being conveyed on the second conveyor 30, that is, to perform a task to store a predetermined number of workpieces W1 in the workpiece W2.

Thus, the control device 5 is configured to control a conveyor (here, the first conveyor 20) among a plurality of conveyors of which motions are different from each other, which has a possibility that the accuracy of the synchronizing control with the robot 3 is degraded because the operation of the robot 3 is delayed by the speed variation of the conveyor. Therefore, the accuracy of the synchronizing control between the robot 3 and the first conveyor 20 can be improved.

As described above, in the second embodiment, since it includes a plurality of conveyors 20 and 30, and the control device 5 controls the operation of the drive source 40 for driving at least one conveyor 20 among the plurality of conveyors 20 and 30, the accuracy of the synchronizing control between the robot 3 and the conveyor 20 can be improved. Note that, although it is configured to drive the second conveyor 30 independently, the second conveyor 30 may be connected with the control device 5 to perform a similar synchronizing control to the above.

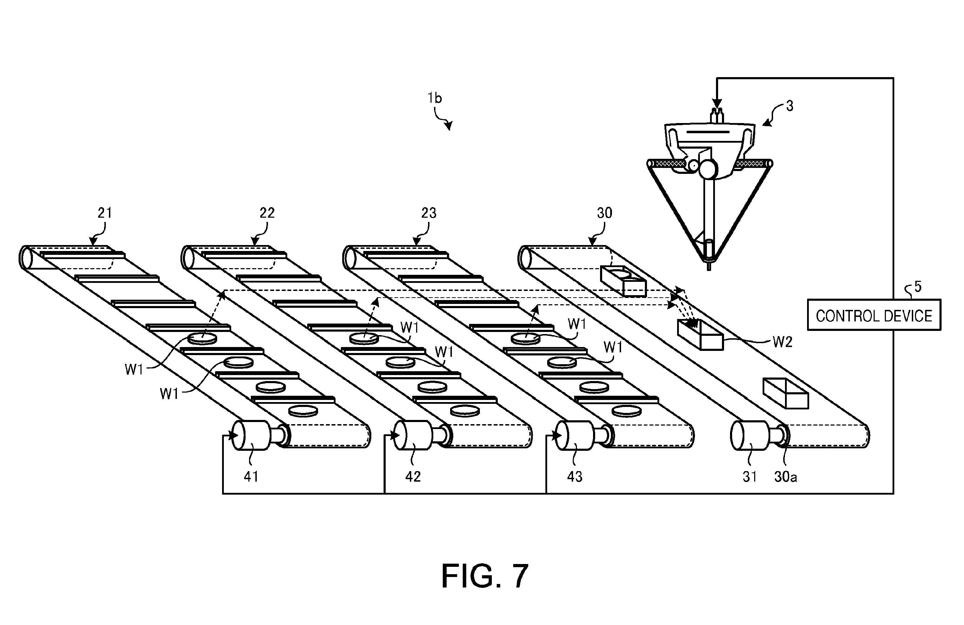

Fig. 7 shows a modification of the robot system 1a of Fig. 6. As shown in Fig. 7, in a robot system 1b, a control device 5 controls the operations of drive sources 41, 42 and 43 of two or more conveyors 21, 22 and 23 (three conveyors in Fig. 7) among a plurality of conveyors, specifically four conveyors 21, 22, 23 and 30.

Specifically, the conveyors 21, 22 and 23 are driven by the drive sources 41, 42 and 43, respectively, and the operations of the drive sources 41, 42 and 43 are each controlled by the control device 5. Specifically, the drive sources 41, 42 and 43 are controlled so that they drive the respective conveyors 21, 22 and 23, for example, at a comparatively high speed, while the conveyors repeat acceleration and deceleration. Note that the conveyor 30 is configured so that it is driven independently from the control device 5 as described above and its speed is set, for example, at a comparatively low and constant speed.

For example, the control device 5 of the robot system 1b causes a robot 3 to perform a task in which, for example, the robot 3 sucks and holds workpieces W1 being conveyed on the respective conveyors 21, 22 and 23, and accommodate the workpieces W1 into a box-shaped workpiece W2 being conveyed on the conveyor 30.

By configuring in this way, if there are two or more conveyors with possibilities that the accuracies of the synchronizing control are degraded, and, even if there are three such conveyors 21, 22 and 23 in this example, the accuracies of the synchronizing control between the robot 3 and the respective conveyors 21, 22 and 23 can be improved.

Further, for example, even in a case where each of the conveyors 21, 22 and 23 is set mutually different from another in speed and/or motion, the accuracy of the synchronizing control between the robot 3 and the respective conveyors 21, 22 and 23 will not be degraded if the control device 5 carries out the robot control based on the drive source instruction values of the respective drive sources 41, 42 and 43.

Meanwhile, in a production facility where, for example, there are a plurality of existing conveyors, the accuracy of the synchronizing control between some of the conveyors and the robot may be improved. In such a case, the target conveyor(s) are connected with the control device as shown in Figs. 6 and 7, and the robot control is carried out based on the drive source instruction value(s). Therefore, it becomes possible to easily improve the accuracies of the synchronizing control between the robot and the conveyor(s), and the cost accompanied with the design changes can be lowered as well. Note that since the rest of the effects are the same as those of the first embodiment, explanation thereof is omitted.

Note that, although the conveyor 30 is configured to be driven independently in Fig. 7, it may be connected with the control device 5 to perform a similar synchronizing control. Further, in the above, although particular examples are given for the operations of the conveyors 20, 21, 22, 23 and 30, and the task of the robot 3, they may be suitably changed according to specifications and the like of the robot systems 1a and 1b. Further, the shapes of the workpieces W1 and W2 are not limited to the illustrated shapes.

Further effects and the modifications can easily be retrieved by those skilled in the art. For this reason, a broader mode of the present invention is not limited to the particular details and representative embodiments shown and described above. Therefore, various changes are possible without departing from the spirit and scope of the comprehensive concept of the present invention which can be defined by the appended claims and their equivalents.

## Claims

1. A robot system (1, 1a, 1b), comprising:
a conveying device (2, 20, 21, 22, 23, 30) for conveying a workpiece (W);
a robot (3) for performing a predetermined task to the workpiece (W) being conveyed by the conveying device (2, 20, 21, 22, 23, 30);
a drive source (4, 31, 40, 41, 42, 43) for driving the conveying device (2, 20, 21, 22, 23, 30); and
a control device (5) for controlling operations of the robot (3) and the drive source (4, 31, 40, 41, 42, 43), the control device (5) including:
a drive source instruction value calculation module (5a1) for calculating a drive source instruction value indicative of an instruction to operate the drive source (4, 31, 40, 41, 42, 43); and
a robot instruction value calculation module (5a2) for calculating a robot instruction value indicative of an instruction to operate the robot (3) based on the drive source instruction value calculated by the drive source instruction value calculation module (5a1).

2. The robot system (1, 1a, 1b) of claim 1, further comprising a correction value calculation module (5b) for calculating a correction value of the conveying device (2, 20, 21, 22, 23, 30) based on the drive source instruction value calculated by the drive source instruction value calculation module (5a1), wherein the robot instruction value calculation module (5a2) calculates the robot instruction value based on the correction value of the conveying device calculated by the correction value calculation module (5b).

3. The robot system (1, 1a, 1b) of claim 2, wherein the correction value calculation module (5b) includes:
an operating instruction information calculation module (5b1) for calculating operating instruction information of the drive source (4, 31, 40, 41, 42, 43) based on the drive source instruction value calculated by the drive source instruction value calculation module (5a1); and
an instruction value converting module (5b2) for converting the operating instruction information of the drive source (4, 31, 40, 41, 42, 43) calculated by the operating instruction information calculation module into the correction value of the conveying device (2, 20, 21, 22, 23, 30),
wherein the operating instruction information calculation module (5b1) resets the operating instruction information of the drive source (4, 31, 40, 41, 42, 43) when a reset signal is inputted at a predetermined timing.

4. The robot system (1, 1a, 1b) of any one of claims 1 to 3, wherein the drive source instruction value calculation module (5a1) calculates the drive source instruction value so that the conveying device (2, 20, 21, 22, 23, 30) repeats acceleration and deceleration.

5. The robot system (1, 1a, 1b) of any one of claims 1 to 4, wherein the conveying device (2, 20, 21, 22, 23, 30) includes a plurality of conveying devices (2, 20, 21, 22, 23, 30), and the control device (5) controls operation of a drive source (4, 31, 40, 41, 42, 43) for driving at least one of the plurality of conveying devices (2, 20, 21, 22, 23, 30).
